# EUROPÄISCHE PATENTSCHRIFT

(11) **EP 4 113 910 B1**
(45) Veröffentlichungstag und Bekanntmachung des Hinweises auf die Patenterteilung: **24.07.2024**
(21) Anmeldenummer: 21182630.0
(22) Anmeldetag: 30.06.2021
(51) Int. Cl.: H04L 12/413

(54) **VORRICHTUNG ZUR GALVANISCHEN TRENNUNG ZUMINDEST EINES AN EIN 2-DRAHT-ETHERNET-BUSSYSTEM ANSCHLIESSBAREN GERÄTS UND SWITCH ZUM ANSCHLUSS VON FELDGERÄTEN**
DEVICE FOR THE GALVANIC SEPARATION OF AT LEAST ONE DEVICE CONNECTABLE TO A 2-WIRE ETHERNET BUS SYSTEM, AND SWITCH FOR CONNECTING FIELD DEVICES
DISPOSITIF D'ISOLATION GALVANIQUE D'AU MOINS UN APPAREIL POUVANT ÊTRE CONNECTÉ À UN SYSTÈME DE BUS ETHERNET À 2 FILS ET COMMUTATEUR DE CONNEXION DES APPAREILS DE TERRAIN

(43) Veröffentlichungstag der Anmeldung: 04.01.2023
(73) Patentinhaber: Siemens Aktiengesellschaft, 80333 München (DE)
(72) Erfinder: Gottron, Jens, 76137 Karlsruhe (DE); Meyer, Martin, 90425 Nürnberg (DE); Knjasev, Ivan, 68163 Mannheim (DE)
(74) Vertreter: Siemens Patent Attorneys

(56) Entgegenhaltungen:
- DE-A1- 102020 124 313
- US-A1- 2014 008 997
- US-A1- 2015 102 943

## Beschreibung

Die vorliegende Erfindung betrifft eine Vorrichtung zur galvanischen Trennung zumindest eines an ein 2-Draht-Ethernet-Bussystem anschließbaren Geräts, insbesondere eines Feldgeräts innerhalb eines industriellen Automatisierungssystems, und einen Switch zum Anschluss von Feldgeräten. Dabei umfasst der Switch obige Vorrichtung zur galvanischen Trennung.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

In Ethernet-basierten Kommunikationsnetzen können Probleme entstehen, wenn Netzressourcen für eine Übermittlung von Datenströmen oder von Datenrahmen mit Echtzeitanforderungen konkurrierend für eine Übermittlung von Datenrahmen mit gro-ßem Nutzdateninhalt ohne spezielle Dienstgüteanforderungen beansprucht werden. Dies kann schließlich dazu führen, dass Datenströme oder Datenrahmen mit Echtzeitanforderungen nicht entsprechend einer angeforderten bzw. benötigten Dienstgüte übermittelt werden.

Aus WO 2007/129031A1 ist eine Datensignal-Isolationsvorrichtung mit einem ersten Medienkonverter bekannt. Der erste Medienkonverter ist dafür vorgesehen, elektrische Ausgangsdatensignale in optische Ausgangsdatensignale umzuwandeln. Außerdem ist eine optische Datensignal-Übertragungseinrichtung vorgesehen, die zum Übertragen der genannten, optischen Ausgangsdatensignale konzipiert ist. Darüber hinaus umfasst die Datensignal-Isolationsvorrichtung einen zweiten Medienkonverter, der ausgelegt ist, um die optischen Ausgangsdatensignale zurück in elektrische Ausgangsdatensignale zu konvertieren. Zusätzlich ist eine eigensichere Energieversorgung vorgesehen. Ferner weist die optische Datensignal-Übertragungseinrichtung einen elektrische Isolationsabstand auf. Des Weiteren wird der zweite Medienkonverter durch eine eigensichere Energieversorgung gespeist.

In EP2784977A1 ist eine Kopplereinheit zur Energie- und Datenübertragung in explosionsgefährdeten Umgebungen über Ethernet-Leitungen beschrieben. Die Kopplereinheit weist einen versorgungsseitigen Anschluss für zumindest vieradrige Ethernet-Leitungen zur kombinierten Energie- und Datenübertragung auf. Mit dem versorgungsseitigen Anschluss ist eine Weicheneinheit zur frequenzselektiven Auskopplung eines über eine versorgungsseitige Ethernet-Leitung übertragenen Datensignals und eines Versorgungsstroms verbunden. Verbraucherseitig ist ein Anschluss für Ethernet-Leitungen zur kombinierten Energie- und Datenübertragung über zwei Adern vorgesehen. Mit dem verbraucherseitigen Anschluss ist eine Mischereinheit zur frequenzselektiven Ankopplung eines über eine verbraucherseitigen Ethernet-Leitung zu übertragenden Datensignals und eines geregelten Versorgungsstroms an ein gemeinsames Adernpaar verbunden. Die Kopplereinheit ermöglicht eine Adaption von nicht eigensicherem Power over Ethernet auf eigensicheres Power over Ethernet, das über zweiadrige Leitungen bereitgestellt wird.

DE 10 2020 124313 A1 betrifft ein Eingabe-/Ausgabe-Gerät zur Prozesssteuerung (E/A-Gerät), das herkömmliche E/A-Unterstützung für direkte Bitübertragungsschichten oder Schnittstellen bietet, die mit herkömmlichen Prozesssteuerungskommunikationsprotokollen verbunden sind. Gleichzeitig unterstützt das E/A-Gerät Advanced Physical Layer- oder andere IP-basierte Bitübertragungsschichten und die darauf aufgesetzten Kommunikationsprotokolle. Darüber hinaus kann das E/A-Gerät, wenn Protokolle, wie Sicherheitsprotokolle, zusätzliches Handshaking oder Bestätigungen erfordern, Protokolle zur Verwendung in andere Protokolle einbetten. Darüber hinaus enthält das E/A-Gerät durch Hardware konfigurierbare Funktionen, die eine einfache Konfiguration eines Prozesssteuerungssystems ermöglichen, das mehrere unterschiedliche Bitübertragungsschichten, einschließlich solcher, die von herkömmlichen Prozesssteuerungskommunikationsprotokollen, wie HART- und FOUNDATION Fieldbus-Protokollen, verwendet werden, und erweiterte Bitübertragungsschichten, einschließlich solcher, die von IP-basierten, Ethernet-basierten, paketbasierten und andren Arten von erweiterten Kommunikationsprotokollen verwendet werden, verwendet.

Ethernet Advanced Physical Layer (Ethernet APL) stellt eine OSI Layer 1 Erweiterung dar, die speziell Anforderungen in der Prozessindustrie Rechnung trägt. Dabei steht insbesondere eine Kommunikation mit hoher Geschwindigkeit über große Entfernungen sowie 2-adrige Kabel und Schutzmaßnahmen für einen sicheren Betrieb innerhalb explosionsgefährdeter Bereiche im Vordergrund. Als Barriere zur Realisierung von Eigensicherheit ist jeweils eine elektronische Schaltung an Ausgängen bzw. Eingängen von Switchen und Feldgeräten vorgesehen. Derartige Schaltungen verhindern, dass zündfähige elektrische Energie in Anschlüsse gelangt. Insbesondere müssen Geräte, die in explosionsgefährdeten Bereichen betrieben werden, durch eine Schutzart gemäß Normenreihe IEC60079 geschützt werden. Hierdurch wird sichergestellt, dass eine explosive Umgebung selbst in einem mehrfachen Fehlerfall nicht durch heiße Oberflächen oder Funkenerzeugung entzündet werden kann. Dies erfolgt durch eine sichere Begrenzung von Spannungen und/oder Strömen in eigensicher ausgestalteten Schaltkreisen.

Eine weitere zentrale Anforderung bei eigensicher ausgestalteten Schaltkreisen besteht in einer sicheren, galvanischen Trennung der Schaltkreise. Bei reinen Energieversorgungsanwendungen sind derartige Anforderungen beispielsweise mittels eines Transformators für ein Schaltnetzteil zu erfüllen. Soll zusätzlich zur Energieübertagung eine Datenübertragung mit hoher Datenrate, insbesondere ab 100 Mbit/s, erfolgen, stellt eine galvanische Trennung mittels eines Transformators eine unzulängliche Lösung dar.

Der vorliegenden Erfindung liegt daher die Aufgabe zugrunde, eine Vorrichtung zur galvanischen Trennung zumindest eines an ein 2-Draht-Ethernet-Bussystem anschließbaren Geräts anzugeben, die sowohl dessen Energieversorgung als auch hohe Datenübertragungsraten ermöglicht und in explosionsgefährdeten Umgebungen betrieben werden kann, sowie eine geeignete Lösung zur Implementierung der Erfindung zu schaffen.

Diese Aufgabe wird erfindungsgemäß durch eine Vorrichtung mit den in Anspruch 1 angegebenen Merkmalen und durch einen Switch mit den in Anspruch 14 angegebenen Merkmalen gelöst.

Die erfindungsgemäße Vorrichtung zur galvanischen Trennung zumindest eines an ein 2-Draht-Ethernet-Bussystem anschließbaren Geräts weist eine Uplink- und einer Downlink-PHY-Schnittstellenvorrichtung auf, die jeweils eine Sendeeinheit und eine Empfangseinheit umfassen. Die Empfangseinheiten weisen jeweils zwei Ausgangsanschlüsse zur Bereitstellung eines empfangenen ternär codierten Signals als Differenzsignal auf. Die PHY-Schnittstellenvorrichtungen können insbesondere jeweils ein integrierter Schaltkreis oder eine funktionelle Gruppe eines Schaltkreises sein, durch den bzw. durch die eine Codierung und Decodierung von Daten zwischen einem digitalen System und einem physischen Ausbreitungsmedium erfolgt. Vorzugsweise ist die erfindungsgemäße Vorrichtung zur Verwendung in einem eigensicheren Schaltkreis ausgestaltet und weist gemäß IEC60079-11 eine sichere Anbindung an zu schützende Leitungselemente auf.

Außerdem umfasst die erfindungsgemäße Vorrichtung eine Uplink- und eine Downlink-Signalsplit-Vorrichtung, die jeweils mit den Ausgangsanschlüssen einer zugeordneten Empfangseinheit verbunden sind und zur Aufteilung eines als Differenzsignal bereitgestellten ternär codierten Signals in zwei binäre codierte Signale ausgestaltet sind. Darüber hinaus sind eine Uplink- und eine Downlink-Optokopplervorrichtung vorgesehen, die jeweils mit einer zugeordneten Signalsplit-Vorrichtung verbunden sind und zur Übertragung von zwei empfangenen binär codierten Signalen an eine Sendeeinheit einer zugeordneten PHY-Schnittstellenvorrichtung ausgestaltet sind. Vorzugsweise ist die Uplink-Signalsplit-Vorrichtung mit den Ausgangsanschlüssen der Empfangseinheit der Uplink-PHY-Schnittstellenvorrichtung verbunden, während bei dem die Downlink-Signalsplit-Vorrichtung mit den Ausgangsanschlüssen der Empfangseinheit der Downlink-PHY-Schnittstellenvorrichtung verbunden ist.

Insgesamt ermöglicht die vorliegende Erfindung eine sichere galvanische Trennung eines eigensicheren Schaltkreises sowie eine Begrenzung von Leistung, Strom, Spannung auf ein nicht mehr zündfähiges Niveau mittels eines optischen Trennverfahrens, das sekundärseitig keine Überspannungen hervorruft. Das optische Trennverfahren erlaubt insbesondere eine Nutzung der vorliegenden Erfindung bei hohen Datenraten, da keine kapazitiven Lasten vorhanden sind. Vorzugsweise ist das an das 2-Draht-Ethernet-Bussystem anschließbare Gerät entsprechend Ethernet Advanced Physical Layer ausgestaltet. Darüber hinaus ist die erfindungsgemäße Vorrichtung vorteilhafterweise zum Anschluss an gemultiplexte Versorgungsleitungen des 2-Draht-Ethernet-Bussystems ausgestaltet, die zur gleichzeitigen Energie- und Datenübertragung vorgesehen sind.

Die Uplink- und die Downlink-Signalsplit-Vorrichtung können beispielsweise jeweils durch Komparatoren, Schalttransistoren oder Logikgatter gebildet sein. Vorzugsweise sind die Uplink- und die Downlink-Signalsplit-Vorrichtung jeweils durch 2 Komparatoren für einen jeweiligen Differenzsignalanteil gebildet und zum Vergleich des jeweiligen Differenzsignalanteils mit einem Referenzsignalpegel ausgestaltet.

Entsprechend einer weiteren bevorzugten Ausgestaltung der vorliegenden Erfindung ist das ternär codierte Signal ein MLT-3-Signal, das einen Minus-Signalpegel, einen Null-Signalpegel und einen Plus-Signalpegel umfasst. Die zwei binär codierten Signale umfassen jeweils einen Null-Signalpegel und einen Eins-Signalpegel. Vorteilhafterweise sind die Signalsplit-Vorrichtungen dementsprechend jeweils ausgestaltet,
- den Minus-Signalpegel des MLT-3-Signals auf den Null-Signalpegel eines ersten binär codierten Signals und auf den Eins-Signalpegel eines zweiten binär codierten Signals,
- den Null-Signalpegel des MLT-3-Signals auf denselben Signalpegel des ersten und des zweiten binär codierten Signals sowie
- den Plus-Signalpegel des MLT-3-Signals auf den Eins-Signalpegel des ersten binär codierten Signals und auf den Null-Signalpegel des zweiten binär codierten Signals umzusetzen.

Alternativ hierzu können die Signalsplit-Vorrichtungen jeweils ausgestaltet sein,
- den Minus-Signalpegel des MLT-3-Signals auf den Eins-Signalpegel eines ersten binär codierten Signals und auf den Null-Signalpegel eines zweiten binär codierten Signals,
- den Null-Signalpegel des MLT-3-Signals auf denselben Signalpegel des ersten und des zweiten binär codierten Signals sowie
- den Plus-Signalpegel des MLT-3-Signals auf den Null-Signalpegel des ersten binär codierten Signals und auf den Eins-Signalpegel des zweiten binär codierten Signals umzusetzen.

Bei beiden oben genannten Varianten sind die Signalsplit-Vorrichtungen vorteilhafterweise jeweils ausgestaltet,
- den Null-Signalpegel des MLT-3-Signals auf den Null-Signalpegel des ersten binär codierten Signals und auf den Null-Signalpegel des zweiten binär codierten Signals oder
- den Null-Signalpegel des MLT-3-Signals auf den Eins-Signalpegel des ersten binär codierten Signals und auf den Eins-Signalpegel des zweiten binär codierten Signals umzusetzen.

Vorzugsweise ist die Uplink-Optokopplervorrichtung mit der Uplink-Signalsplit-Vorrichtung verbunden, während die Downlink-Optokopplervorrichtung mit der Downlink-Signalsplit-Vorrichtung verbunden ist. Dabei umfassen die Optokopplervorrichtungen jeweils 2 digitale Optokoppler zur Übertragung jeweils eines der beiden binär codierten Signale. Die Verwendung digitaler Optokoppler ermöglicht eine kostengünstige Implementierung der vorliegenden Erfindung.

Insbesondere können die Optokopplervorrichtungen jeweils 2 digitale Optokoppler umfassen, die jeweils einen eingangsseitigen Anoden-Anschluss, einen eingangsseitigen Kathoden-Anschluss, einen Versorgungsspannungsanschluss, einen Ausgangssignal-Anschluss und einen ausgangsseitigen Masse-Anschluss aufweisen. Dabei sind die Kathoden-Anschlüsse, die Versorgungsspannungsanschlüsse und die Ausgangssignal-Anschlüsse zur Spannungs-, Strom- bzw. Leistungsbegrenzung jeweils mit Begrenzungswiderständen beschaltet. Auf diese Weise können die digitalen Optokoppler in Fehlerfällen wirksam vor Überlastungen geschützt werden.

Der erfindungsgemäße Switch zum Anschluss von Feldgeräten an ein 2-Draht-Ethernet-Bussystem umfasst eine Vorrichtung zur galvanischen Trennung entsprechend vorangehenden Ausführungen. Konkret umfasst der Switch neben einem primären Switch und einem sekundären Switch eine Vorrichtung zur galvanischen Trennung mit einer Uplink- und einer Downlink-PHY-Schnittstellenvorrichtung, einer Uplink- und einer Downlink-Signalsplit-Vorrichtung sowie einer Uplink- und einer Downlink-Optokopplervorrichtung. Der primäre Switch ist mit der Uplink-PHY-Schnittstellenvorrichtung verbunden, während der sekundäre Switch mit der Downlink-PHY-Schnittstellenvorrichtung verbunden ist. Die Uplink- und die Downlink-PHY-Schnittstellenvorrichtung umfassen jeweils eine Sendeeinheit und eine Empfangseinheit. Dabei weisen die Empfangseinheiten jeweils zwei Ausgangsanschlüsse zur Bereitstellung eines empfangenen ternär codierten Signals als Differenzsignal auf.

Die Uplink- und die Downlink-Signalsplit-Vorrichtung des erfindungsgemäßen Switchs sind jeweils mit den Ausgangsanschlüssen einer zugeordneten Empfangseinheit verbunden und zur Aufteilung eines als Differenzsignal bereitgestellten ternär codierten Signals in zwei binäre codierte Signale ausgestaltet. Darüber hinaus sind die Uplink- und die Downlink-Optokopplervorrichtung jeweils mit einer zugeordneten Signalsplit-Vorrichtung verbunden und zur Übertragung von zwei empfangenen binär codierten Signalen an eine Sendeeinheit einer zugeordneten PHY-Schnittstellenvorrichtung ausgestaltet.

Die vorliegende Erfindung wird nachfolgend an einem Ausführungsbeispiel anhand der Zeichnung näher erläutert. Es zeigt
- Figur 1: eine Vorrichtung zur galvanischen Trennung zumindest eines an ein 2-Draht-Ethernet-Bussystem anschließbaren Geräts,
- Figur 2: eine von der Vorrichtung gemäß Figur 1 umfasste Anordnung aus einem Komparator und einem digitalen Optokoppler mit Begrenzungswiderständen,

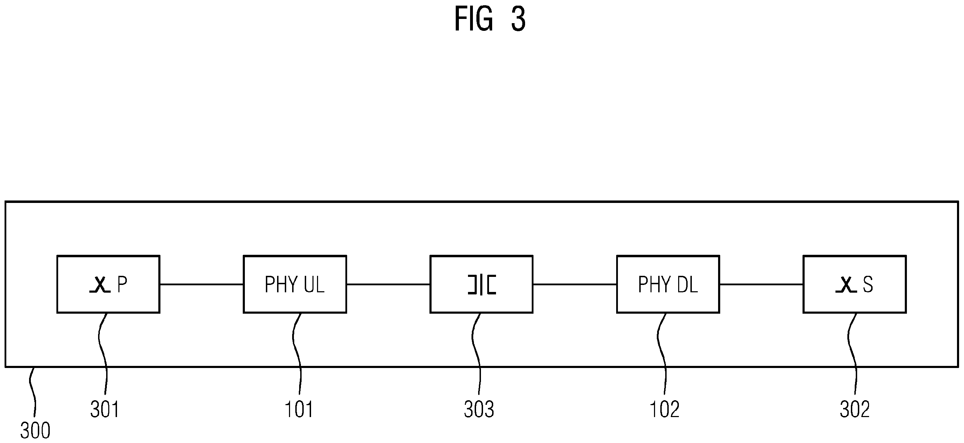

- Figur 3: einen die Vorrichtung gemäß Figur 1 umfassender Switch.

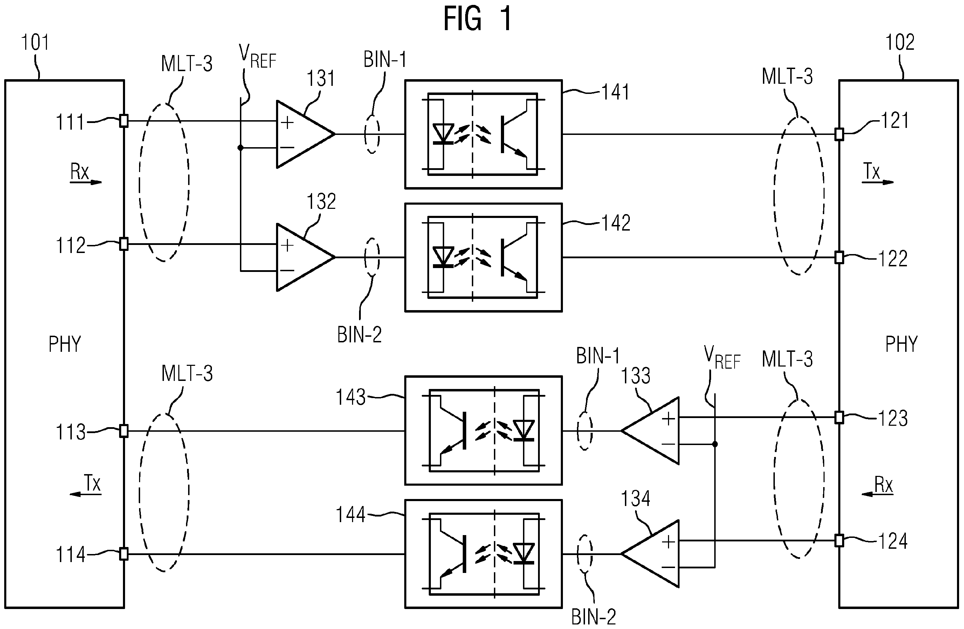

Die in Figur 1 dargestellte Vorrichtung zur galvanischen Trennung zumindest eines an ein 2-Draht-Ethernet-Bussystem anschließbaren Geräts ist vorzugsweise zur Verwendung in einem eigensicheren Schaltkreis ausgestaltet und weist vorteilhafterweise gemäß IEC60079-11 eine sichere Anbindung an zu schützende Leitungselemente auf. Dabei ist das zumindest eine an das 2-Draht-Ethernet-Bussystem anschließbare Gerät beispielsweise entsprechend Ethernet Advanced Physical Layer ausgestaltet. Entsprechend einer besonders bevorzugten Ausführungsform ist die Vorrichtung zum Anschluss an gemultiplexte Versorgungsleitungen des 2-Draht-Ethernet-Bussystems ausgestaltet, die zur gleichzeitigen Energie- und Datenübertragung vorgesehen sind.

Entsprechend Figur 1 weist die Vorrichtung eine Uplink- und eine Downlink-PHY-Schnittstellenvorrichtung 101, 102 auf, die jeweils eine Sendeeinheit Tx und eine Empfangseinheit Rx umfassen. Die Empfangseinheiten Rx weisen jeweils zwei Ausgangsanschlüsse 111-112, 123-124 zur Bereitstellung eines empfangenen ternär codierten Signals als Differenzsignal MLT-3 auf. Außerdem weist die Vorrichtung eine Uplink- und einer Downlink-Signalsplit-Vorrichtung 131-132, 133-134 auf, die jeweils mit den Ausgangsanschlüssen 111-112, 123-124 einer zugeordneten Empfangseinheit Rx verbunden sind und zur Aufteilung eines als Differenzsignal bereitgestellten ternär codierten Signals MLT-3 in zwei binäre codierte Signale BIN-1, BIN-2 ausgestaltet sind.

Im vorliegenden Ausführungsbeispiel sind die Uplink- und die Downlink-Signalsplit-Vorrichtung jeweils durch 2 Komparatoren 131-132, 133-134 für einen jeweiligen Differenzsignalanteil gebildet, der an einem der Ausgangsanschlüsse 111-112, 123-124 anliegt, und zum Vergleich des jeweiligen Differenzsignalanteils mit einem Referenzsignalpegel V_{REF} ausgestaltet. Alternativ zu dieser Ausgestaltung können die Uplink- und die Downlink-Signalsplit-Vorrichtung grundsätzlich auch jeweils durch Schalttransistoren oder Logikgatter gebildet sein.

Die Uplink-Signalsplit-Vorrichtung 131-132 ist mit den Ausgangsanschlüssen 111-112 der Empfangseinheit Rx der Uplink-PHY-Schnittstellenvorrichtung 101 verbunden, während die Downlink-Signalsplit-Vorrichtung 133-134 mit den Ausgangsanschlüssen 123-124 der Empfangseinheit Rx der Downlink-PHY-Schnittstellenvorrichtung 102 verbunden ist. Außerdem sind eine Uplink- und eine Downlink-Optokopplervorrichtung 141-142, 143-144 vorgesehen, die jeweils mit einer zugeordneten Signalsplit-Vorrichtung 131-132 verbunden sind und zur Übertragung von zwei empfangenen binär codierten Signalen BIN-1, BIN-2 an eine Sendeeinheit TX einer zugeordneten PHY-Schnittstellenvorrichtung 101, 102 ausgestaltet sind. Dabei ist die Uplink-Optokopplervorrichtung 141-142 mit der Uplink-Signalsplit-Vorrichtung 131-132 verbunden, während die Downlink-Optokopplervorrichtung 143-144 mit der Downlink-Signalsplit-Vorrichtung 133-134 verbunden ist. Die Optokopplervorrichtungen umfassen jeweils 2 digitale Optokoppler 141-142, 143-144 zur Übertragung jeweils eines der beiden binär codierten Signale BIN-1, BIN-2.

Downlink- bzw. Uplink-seitig stellen die Optokoppler 141-142, 143-144 über ihre Ausgangsanschlüsse jeweils wieder ein ternär codiertes Signal als Differenzsignal MLT-3 bereit, das jeweils zwei Eingangsanschlüssen 121-122, 113-114 der Sendeeinheiten Tx der PHY-Schnittstellenvorrichtungen 102, 101 zugeführt wird. Im vorliegenden Ausführungsbeispiel ist das ternär codierte Signal ein MLT-3-Signal, das einen Minus-Signalpegel, einen Null-Signalpegel und einen Plus-Signalpegel umfasst. Demgegenüber umfassen die zwei binär codierten Signale BIN-1, BIN-2 jeweils einen Null-Signalpegel und einen Eins-Signalpegel.

Die durch die Komparatoren 131-132, 133-134 gebildeten Signalsplit-Vorrichtungen sind jeweils ausgestaltet,
- den Minus-Signalpegel des MLT-3-Signals auf den Null-Signalpegel eines ersten binär codierten Signals BIN-1 und auf den Eins-Signalpegel eines zweiten binär codierten Signals BIN-2,
- den Null-Signalpegel des MLT-3-Signals auf denselben Signalpegel des ersten und des zweiten binär codierten Signals BIN-1, BIN-2 und
- den Plus-Signalpegel des MLT-3-Signals auf den Eins-Signalpegel des ersten binär codierten Signals BIN-1 und auf den Null-Signalpegel des zweiten binär codierten Signals BIN-2
   umzusetzen. Dabei kann der Null-Signalpegel des MLT-3-Signals
- auf den Null-Signalpegel des ersten binär codierten Signals BIN-1 und auf den Null-Signalpegel des zweiten binär codierten Signals BIN-2 oder alternativ
- auf den Eins-Signalpegel des ersten binär codierten Signals BIN-1 und auf den Eins-Signalpegel des zweiten binär codierten Signals BIN-2
   umgesetzt werden.

Nachstehende Tabelle veranschaulicht oben beschriebene Umsetzung zwischen dem MLT-3-Signal und den beiden binär codierten Signalen BIN-1, BIN-2 für den Fall, dass der Null-Signalpegel des MLT-3-Signals jeweils auf den Null-Signalpegel der binär codierten Signale BIN-1, BIN-2 umgesetzt wird.

| MLT-3 | BIN-1 | BIN-2 |
|---|---|---|
| Minus (-1) | 0 | 1 |
| Null (0) | 0 | 0 |
| Plus (1) | 1 | 0 |

Entsprechend einer alternativen Ausführungsform könnte
- der Minus-Signalpegel des MLT-3-Signals auf den Eins-Signalpegel eines ersten binär codierten Signals BIN-1 und auf den Null-Signalpegel eines zweiten binär codierten Signals BIN-2,
- der Null-Signalpegel des MLT-3-Signals auf denselben Signalpegel des ersten und des zweiten binär codierten Signals BIN-1, BIN-2 und
- der Plus-Signalpegel des MLT-3-Signals auf den Null-Signalpegel des ersten binär codierten Signals BIN-1 und auf den Eins-Signalpegel des zweiten binär codierten Signals BIN-2
   umgesetzt werden. Für den Fall, dass der Null-Signalpegel des MLT-3-Signals jeweils auf den Null-Signalpegel der binär codierten Signale BIN-1, BIN-2 umgesetzt wird, entspräche dies einer Vertauschung der Inhalte der Spalten in obiger Tabelle für die binär codierten Signale BIN-1, BIN-2.

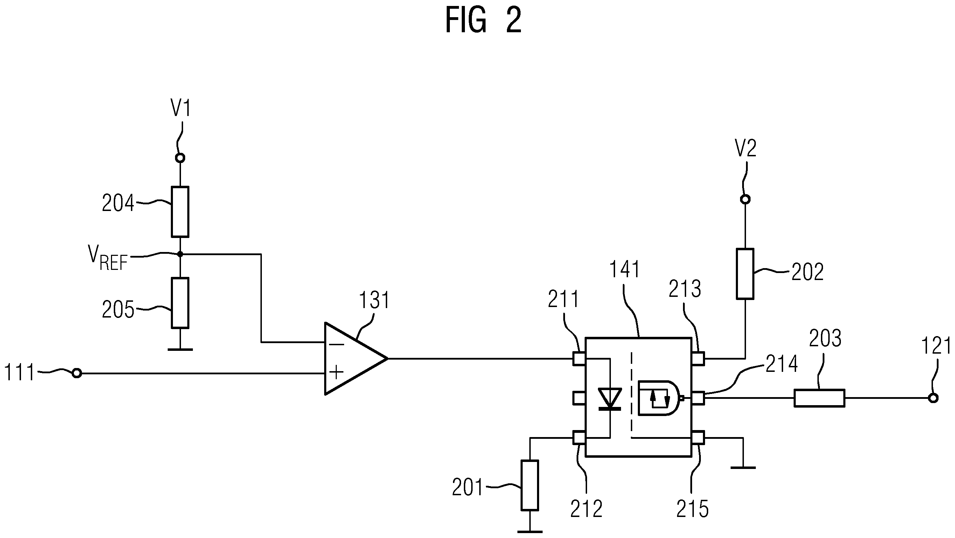

Entsprechend Figur 2 ist eine von der Vorrichtung gemäß Figur 1 umfasste Anordnung aus einem Komparator und einem digitalen Optokoppler dargestellt, wobei der digitale Optokoppler zur Spannungs-, Strom- bzw. Leistungsbegrenzung mit Begrenzungswiderständen beschaltet ist. Exemplarisch werden in Figur 2 der Komparator 131 und der digitale Optokoppler 141 betrachtet. Der Referenzsignalpegel V_{REF} am Komparator 131 wird über einen Spannungsteiler mit 2 Widerständen 204, 205 von einer ersten Spannungsquelle V1 abgegriffen und mit dem am Ausgangsanschluss 111 anliegenden Differenzsignalanteil verglichen. Im vorliegenden Ausführungsbeispiel wird eine Differenz zwischen dem Differenzsignalanteil und dem Referenzsignalpegel V_{REF} verstärkt. Ein entsprechend verstärktes Differenzsignal wird einem eingangsseitigen Anoden-Anschluss 211 des digitalen Optokopplers 141 zugeführt.

Neben dem Anoden-Anschluss 211 umfasst der digitale Optokoppler 141 einen eingangsseitigen Kathoden-Anschluss 212, einen Versorgungsspannungsanschluss 213, einen Ausgangssignal-Anschluss 214 und einen ausgangsseitigen Masse-Anschluss 215. Der Kathoden-Anschluss 212, der Versorgungsspannungsanschluss 213 und der Ausgangssignal-Anschluss 215 sind jeweils mit einem Begrenzungswiderstand 201-203 beschaltet. Dabei ist ein erster Begrenzungswiderstand 201 zwischen dem Kathoden-Anschluss 212 und Masse angeschlossen. Ein zweiter Begrenzungswiderstand 202 ist zwischen dem Versorgungsspannungsanschluss 213 und einer zweiten Spannungsquelle V2 angeschlossen, während ein dritter Begrenzungswiderstand 203 zwischen dem Ausgangssignal-Anschluss 215 und dem Eingangsanschluss 121 der Sendeeinheit Tx der Downlink-PHY-Schnittstellenvorrichtung 102 angeschlossen ist. Durch diese Begrenzungswiderstände 201-203 können Bauelemente in einem Fehlerfall vor einer Überlastung geschützt werden, ohne dass eine Signalintegrität unzulässig beeinflusst wird.

Auf Basis der in Figur 1 dargestellten Vorrichtung zur galvanischen Trennung kann ein Switch 300 zum Anschluss von Feldgeräten an ein 2-Draht-Ethernet-Bussystem realisiert werden.

Dabei umfasst der Switch neben einem Uplink-seitigen primären Switch 301 und einem Downlink-seitigen sekundären Switch 302 die PHY-Schnittstellenvorrichtungen 101, 102 sowie eine Einheit 303 zur galvanischen Trennung. Die Einheit 303 zur galvanischen Trennung umfasst dabei die Komparatoren 131-134 sowie die digitalen Optokoppler 141-144 und ist sowohl einerseits mit der Uplink-PHY-Schnittstellenvorrichtung 101 als auch andererseits mit der Downlink-PHY-Schnittstellenvorrichtung 102 verbunden. Die Uplink-PHY-Schnittstellenvorrichtung 101 ist wiederum mit dem primären Switch 301 verbunden, während die Downlink-PHY-Schnittstellenvorrichtung 102 mit dem sekundären Switch 302 verbunden ist.

## Patentansprüche

1. Vorrichtung zur galvanischen Trennung zumindest eines an ein 2-Draht-Ethernet-Bussystem anschließbaren Geräts mit
- einer Uplink- und einer Downlink-PHY-Schnittstellenvorrichtung (101, 102), die jeweils eine Sendeeinheit (Tx) und eine Empfangseinheit (Rx) umfassen, wobei die Empfangseinheiten jeweils zwei Ausgangsanschlüsse (111-112, 123-124) zur Bereitstellung eines empfangenen ternär codierten Signals als Differenzsignal (MLT-3) aufweisen,
- einer Uplink- und einer Downlink-Signalsplit-Vorrichtung (131-132, 133-134), die jeweils mit den Ausgangsanschlüssen einer zugeordneten Empfangseinheit verbunden sind und zur Aufteilung eines als Differenzsignal bereitgestellten ternär codierten Signals in zwei binäre codierte Signale (BIN-1, BIN-2) ausgestaltet sind,
- einer Uplink- und einer Downlink-Optokopplervorrichtung (141-142, 143-144), die jeweils mit einer zugeordneten Signalsplit-Vorrichtung verbunden sind und zur Übertragung von zwei empfangenen binär codierten Signalen an eine Sendeeinheit einer zugeordneten PHY-Schnittstellenvorrichtung ausgestaltet sind.

2. Vorrichtung nach Anspruch 1,
bei dem die Uplink-Signalsplit-Vorrichtung (131-132) mit den Ausgangsanschlüssen (111-112) der Empfangseinheit der Uplink-PHY-Schnittstellenvorrichtung (101) verbunden ist und bei dem die Downlink-Signalsplit-Vorrichtung (133-134) mit den Ausgangsanschlüssen der Empfangseinheit der Downlink-PHY-Schnittstellenvorrichtung (102) verbunden ist.

3. Vorrichtung nach einem der Ansprüche 1 oder 2,
bei dem die Uplink- und die Downlink-Signalsplit-Vorrichtung jeweils durch Komparatoren (131-134), Schalttransistoren oder Logikgatter gebildet sind.

4. Vorrichtung nach Anspruch 3,
bei dem die Uplink- und die Downlink-Signalsplit-Vorrichtung jeweils durch 2 Komparatoren (131-132, 133-134) für einen jeweiligen Differenzsignalanteil gebildet und zum Vergleich des jeweiligen Differenzsignalanteils mit einem Referenzsignalpegel (V_{REF}) ausgestaltet sind.

5. Vorrichtung nach einem der Ansprüche 3 oder 4,
bei dem das ternär codierte Signal ein MLT-3-Signal ist, das einen Minus-Signalpegel, einen Null-Signalpegel und einen Plus-Signalpegel umfasst, bei dem die zwei binär codierten Signale jeweils einen Null-Signalpegel und einen Eins-Signalpegel umfassen.

6. Vorrichtung nach Anspruch 5,
bei dem die Signalsplit-Vorrichtungen jeweils ausgestaltet sind, den Minus-Signalpegel des MLT-3-Signals auf den Null-Signalpegel eines ersten binär codierten Signals und auf den Eins-Signalpegel eines zweiten binär codierten Signals, den Null-Signalpegel des MLT-3-Signals auf denselben Signalpegel des ersten und des zweiten binär codierten Signals sowie den Plus-Signalpegel des MLT-3-Signals auf den Eins-Signalpegel des ersten binär codierten Signals und auf den Null-Signalpegel des zweiten binär codierten Signals umzusetzen.

7. Vorrichtung nach Anspruch 5,
bei dem die Signalsplit-Vorrichtungen jeweils ausgestaltet sind, den Minus-Signalpegel des MLT-3-Signals auf den Eins-Signalpegel eines ersten binär codierten Signals und auf den Null-Signalpegel eines zweiten binär codierten Signals, den Null-Signalpegel des MLT-3-Signals auf denselben Signalpegel des ersten und des zweiten binär codierten Signals sowie den Plus-Signalpegel des MLT-3-Signals auf den Null-Signalpegel des ersten binär codierten Signals und auf den Eins-Signalpegel des zweiten binär codierten Signals umzusetzen.

8. Vorrichtung nach einem der Ansprüche 6 oder 7,
bei dem die Signalsplit-Vorrichtungen jeweils ausgestaltet sind, den Null-Signalpegel des MLT-3-Signals auf den Null-Signalpegel des ersten binär codierten Signals und auf den Null-Signalpegel des zweiten binär codierten Signals oder den Null-Signalpegel des MLT-3-Signals auf den Eins-Signalpegel des ersten binär codierten Signals und auf den Eins-Signalpegel des zweiten binär codierten Signals umzusetzen.

9. Vorrichtung nach einem der Ansprüche 1 bis 8,
bei dem die Uplink-Optokopplervorrichtung (141-142) mit der Uplink-Signalsplit-Vorrichtung (131-132) verbunden ist, bei dem die Downlink-Optokopplervorrichtung (143-144) mit der Downlink-Signalsplit-Vorrichtung (133-134) verbunden ist und bei dem die Optokopplervorrichtungen jeweils 2 digitale Optokoppler (141-142, 143-144) zur Übertragung jeweils eines der beiden binär codierten Signale (BIN-1, BIN-2) umfassen.

10. Vorrichtung nach einem der Ansprüche 1 bis 9,
bei dem die Vorrichtung zur Verwendung in einem eigensicheren Schaltkreis ausgestaltet ist und gemäß IEC60079-11 eine sichere Anbindung an zu schützende Leitungselemente aufweist.

11. Vorrichtung nach einem der Ansprüche 1 bis 10,
bei dem die Optokopplervorrichtungen jeweils 2 digitale Optokoppler (141-142, 143-144) umfassen, die jeweils einen eingangsseitigen Anoden-Anschluss (211), einen eingangsseitigen Kathoden-Anschluss ()212, einen Versorgungsspannungsanschluss (213), einen Ausgangssignal-Anschluss (214) und einen ausgangsseitigen Masse-Anschluss (215) aufweisen, und bei dem die Kathoden-Anschlüsse, die Versorgungsspannungsanschlüsse und die Ausgangssignal-Anschlüsse zur Spannungs-, Strom- und/oder Leistungsbegrenzung jeweils mit Begrenzungswiderständen (201-203) beschaltet sind.

12. Vorrichtung nach einem der Ansprüche 1 bis 11,
bei dem die Vorrichtung zum Anschluss an gemultiplexte Versorgungsleitungen des 2-Draht-Ethernet-Bussystems ausgestaltet ist, die zur gleichzeitigen Energie- und Datenübertragung vorgesehen sind.

13. Vorrichtung nach einem der Ansprüche 1 bis 12,
bei dem das an das 2-Draht-Ethernet-Bussystem anschließbare Gerät entsprechend Ethernet Advanced Physical Layer ausgestaltet ist.

14. Switch, umfassend eine Vorrichtung nach einem der Ansprüche 1 bis 13 mit einer Uplink- und einer Downlink-PHY-Schnittstellenvorrichtung, einer Uplink- und einer Downlink-Signalsplit-Vorrichtung sowie einer Uplink- und einer Downlink-Optokopplervorrichtung, zum Anschluss von Feldgeräten an ein 2-Draht-Ethernet-Bussystem mit
- einem primären Switch (301),
- einem sekundären Switch (302),
- wobei der primäre Switch mit der Uplink-PHY-Schnittstellenvorrichtung (101) und der sekundäre Switch mit der Downlink-PHY-Schnittstellenvorrichtung (102) verbunden ist,
- wobei die Uplink- und die Downlink-PHY-Schnittstellenvorrichtung jeweils eine Sendeeinheit und eine Empfangseinheit umfassen, wobei die Empfangseinheiten jeweils zwei Ausgangsanschlüsse zur Bereitstellung eines empfangenen ternär codierten Signals als Differenzsignal aufweisen,
- wobei die Uplink- und die Downlink-Signalsplit-Vorrichtung jeweils mit den Ausgangsanschlüssen einer zugeordneten Empfangseinheit verbunden sind und zur Aufteilung eines als Differenzsignal bereitgestellten ternär codierten Signals in zwei binäre codierte Signale ausgestaltet sind,
- wobei die Uplink- und die Downlink-Optokopplervorrichtung jeweils mit einer zugeordneten Signalsplit-Vorrichtung verbunden sind und zur Übertragung von zwei empfangenen binär codierten Signalen an eine Sendeeinheit einer zugeordneten PHY-Schnittstellenvorrichtung ausgestaltet sind.

## Claims

1. Device for the galvanic isolation of at least one apparatus which is connectable to a 2-wire Ethernet bus system, comprising
- an uplink and a downlink PHY interface device (101, 102), each comprising a transmitting unit (Tx) and a receiving unit (Rx), wherein the receiving units each have two output terminals (111-112, 123-124) for providing a received ternary-coded signal as differential signal (MLT-3),
- an uplink and a downlink signal split device (131-132, 133-134), each connected to the output terminals of an assigned receiving unit and configured for splitting a ternary-coded signal provided as differential signal into two binary-coded signals (BIN-1, BIN-2),
- an uplink and a downlink optocoupler device (141-142, 143-144) each connected to an assigned signal split device and configured for transferring two received binary-coded signals to a transmitting unit of an assigned PHY interface device.

2. Device according to Claim 1,
wherein the uplink signal split device (131-132) is connected to the output terminals (111-112) of the receiving unit of the uplink PHY interface device (101) and wherein the downlink signal split device (133-134) is connected to the output terminals of the receiving unit of the downlink PHY interface device (102).

3. Device according to either of Claims 1 and 2,
wherein the uplink and downlink signal split devices are each formed by comparators (131-134), switching transistors or logic gates.

4. Device according to Claim 3,
wherein the uplink and downlink signal split devices are each formed by 2 comparators (131-132, 133-134) for a respective differential signal component and are configured for comparing the respective differential signal component with a reference signal level (V_{REF}).

5. Device according to either of Claims 3 and 4,
wherein the ternary-coded signal is an MLT-3 signal comprising a negative signal level, a zero signal level and a positive signal level, wherein the two binary-coded signals each comprise a zero signal level and a one signal level.

6. Device according to Claim 5,
wherein the signal split devices are each configured to convert the negative signal level of the MLT-3 signal to the zero signal level of a first binary-coded signal and to the one signal level of a second binary-coded signal, the zero signal level of the MLT-3 signal to the same signal level of the first and second binary-coded signals and the positive signal level of the MLT-3 signal to the one signal level of the first binary-coded signal and to the zero signal level of the second binary-coded signal.

7. Device according to Claim 5,
wherein the signal split devices are each configured to convert the negative signal level of the MLT-3 signal to the one signal level of a first binary-coded signal and to the zero signal level of a second binary-coded signal, the zero signal level of the MLT-3 signal to the same signal level of the first and second binary-coded signals and the positive signal level of the MLT-3 signal to the zero signal level of the first binary-coded signal and to the one signal level of the second binary-coded signal.

8. Device according to either of Claims 6 and 7,
wherein the signal split devices are each configured to convert the zero signal level of the MLT-3 signal to the zero signal level of the first binary-coded signal and to the zero signal level of the second binary-coded signal or the zero signal level of the MLT-3 signal to the one signal level of the first binary-coded signal and to the one signal level of the second binary-coded signal.

9. Device according to any of Claims 1 to 8,
wherein the uplink optocoupler device (141-142) is connected to the uplink signal split device (131-132), wherein the downlink optocoupler device (143-144) is connected to the downlink signal split device (133-134) and wherein the optocoupler devices each comprise 2 digital optocouplers (141-142, 143-144) for transferring in each case one of the two binary-coded signals (BIN-1, BIN-2).

10. Device according to any of Claims 1 to 9,
wherein the device is configured for use in an intrinsically safe circuit and, in accordance with IEC60079-11, has a safe link to line elements to be protected.

11. Device according to any of Claims 1 to 10,
wherein the optocoupler devices each comprise 2 digital optocouplers (141-142, 143-144), each having an input-side anode terminal (211), an input-side cathode terminal (212), a supply voltage terminal (213), an output signal terminal (214) and an output-side ground terminal (215), and wherein the cathode terminals, the supply voltage terminals and the output signal terminals are each interconnected with limiting resistors (201-203) for the purpose of voltage, current and/or power limiting.

12. Device according to any of Claims 1 to 11,
wherein the device is configured for connection to multiplexed supply lines of the 2-wire Ethernet bus system which are provided for simultaneous power and data transmission.

13. Device according to any of Claims 1 to 12,
wherein the apparatus which is connectable to the 2-wire Ethernet bus system is configured according to Ethernet Advanced Physical Layer.

14. Switch, comprising a device according to any of Claims 1 to 13 comprising an uplink and a downlink PHY interface device, an uplink and a downlink signal split device and also an uplink and a downlink optocoupler device, for connecting field apparatuses to a 2-wire Ethernet bus system, comprising
- a primary switch (301),
- a secondary switch (302),
- wherein the primary switch is connected to the uplink PHY interface device (101) and the secondary switch is connected to the downlink PHY interface device (102),
- wherein the uplink and downlink PHY interface devices each comprise a transmitting unit and a receiving unit, wherein the receiving units each have two output terminals for providing a received ternary-coded signal as differential signal,
- wherein the uplink and downlink signal split devices are each connected to the output terminals of an assigned receiving unit and are configured for splitting a ternary-coded signal provided as differential signal into two binary coded signals,
- wherein the uplink and downlink optocoupler devices are each connected to an assigned signal split device and are configured for transferring two received binary-coded signals to a transmitting unit of an assigned PHY interface device.

## Revendications

1. Dispositif de séparation galvanique d'au moins un appareil pouvant être connecté à un système de bus Ethernet à 2 fils, comprenant
- un dispositif (101) d'interface PHY uplink et un dispositif (102) d'interface PHY downlink, qui comprennent chacun une unité (Tx) d'émission et une unité (Rx) de réception, dans lequel les unités de réception ont chacune deux bornes (111-112, 123-124) de sortie pour disposer d'un signal reçu codé de manière ternaire comme signal (MLT-3) de différence,
- un dispositif (131-132) de division du signal uplink et un dispositif (133-134) de division du signal downlink, qui sont connectés chacun aux bornes de sortie d'une unité de réception associée et qui sont conformés pour subdiviser un signal codé de manière ternaire mis à disposition comme signal de différence en deux signaux (BIN-1, BIN-2) codés binaires,
- un dispositif (141-142) d'optocoupleur uplink et un dispositif (143-144) d'optocoupleur downlink, qui sont connectés chacun à un dispositif associé de division du signal et qui sont conformés pour la transmission de deux signaux reçus codés de manière binaire à une unité d'émission d'un dispositif d'interface PHY associé.

2. Dispositif suivant la revendication 1,
dans lequel le dispositif (131-132) de division du signal uplink est connecté aux bornes (111-112) de sortie de l'unité de réception du dispositif (101) d'interface PHY uplink et dans lequel le dispositif (133-134) de division du signal downlink est connecté aux bornes de sortie de l'unité de réception du dispositif (102) d'interface PHY downlink.

3. Dispositif suivant l'une des revendications 1 ou 2,
dans lequel le dispositif de division du signal uplink et le dispositif de division du signal downlink sont formés chacun de comparateurs (131-134), de transistors de coupure ou de portes logiques.

4. Dispositif suivant la revendication 3,
dans lequel le dispositif de division du signal uplink et le dispositif de division du signal downlink sont formés chacun de 2 comparateurs (131-132, 133-134) pour une partie respective de signal de différence et sont conformés pour la comparaison de la partie respective du signal de différence à un niveau (V_{REF}) de signal de référence.

5. Dispositif suivant l'une des revendications 3 ou 4,
dans lequel le signal codé de manière ternaire est un signal MLT-3, qui comprend un niveau de signal négatif, un niveau de signal zéro et un niveau de signal positif, dans lequel les deux signaux codés de manière binaire comprennent chacun un niveau de signal zéro et un niveau de signal un.

6. Dispositif suivant la revendication 5,
dans lequel les dispositifs de division du signal sont conformés chacun pour transformer le niveau de signal négatif du signal MLT-3 en le niveau de signal zéro d'un premier signal codé de manière binaire et en le niveau de signal un d'un deuxième signal codé de manière binaire, le niveau de signal zéro du signal MLT-3 en le même niveau de signal du premier et du deuxième signal codés de manière binaire ainsi que le niveau de signal positif du signal MLT-3 en le niveau de signal un du premier signal codé de manière binaire et en le niveau de signal zéro du deuxième signal codé de manière binaire.

7. Dispositif suivant la revendication 5,
dans lequel les dispositifs de division du signal sont conformés chacun pour transformer le niveau de signal négatif du signal MLT-3 en le niveau de signal un d'un premier signal codé de manière binaire et en le niveau de signal zéro d'un deuxième signal codé de manière binaire, le niveau du signal zéro du signal MLT-3 en le même niveau de signal du premier et du deuxième signal codés de manière binaire, ainsi que le niveau de signal positif du signal MLT-3 en le niveau de signal zéro du premier signal codé de manière binaire et en le niveau de signal un du deuxième signal codé de manière binaire.

8. Dispositif suivant l'une des revendications 6 ou 7,
dans lequel les dispositifs de division du signal sont conformés chacun pour transformer le niveau de signal zéro du signal MLT-3 en le niveau de signal zéro du premier signal codé de manière binaire et en le niveau de signal zéro du deuxième signal codé de manière binaire ou le niveau de signal zéro du signal MLT-3 en le niveau de signal un du premier signal codé de manière binaire et en le niveau de signal un du deuxième signal codé de manière binaire.

9. Dispositif suivant l'une des revendications 1 à 8,
dans lequel le dispositif (141-142) d'optocoupleur uplink est connecté au dispositif (131-132) de division du signal uplink, dans lequel le dispositif (143-144) d'optocoupleur downlink est relié au dispositif (133-134) de division du signal downlink, et dans lequel les dispositifs d'optocoupleur comprennent chacun 2 optocoupleurs (141-142, 143-144) numériques de transmission respectivement de l'un des deux signaux (BIN-1, BIN-2) codés de manière binaire.

10. Dispositif suivant l'une des revendications 1 à 9,
dans lequel le dispositif est conformé pour l'utilisation d'un circuit sécurisé de manière autonome et a, suivant IEC60079-11, une liaison sécurisée à des éléments de ligne à protéger.

11. Dispositif suivant l'une des revendications 1 à 10,
dans lequel les dispositifs d'optocoupleur comprennent chacun 2 octocoupleurs (141-142, 143-144) numériques, qui ont chacun une borne (211) d'anode du côté de l'entrée, une borne (212) de cathode du côté de l'entrée, une borne (213) de tension d'alimentation, une borne (214) de signal de sortie, une borne (215) de masse du côté de la sortie, et dans lequel les bornes de cathode, les bornes de tension d'alimentation, les bornes de signal de sortie sont montées chacune avec des résistances (201-203) de limitation pour la limitation de la tension du courant et/ou de la puissance.

12. Dispositif suivant l'une des revendications 1 à 11,
dans lequel le dispositif est conformé pour la connexion à des lignes d'alimentation multiplexées du système de bus Ethernet à 2 fils, qui sont prévues pour la transmission simultanée d'énergie et de données.

13. Dispositif suivant l'une des revendications 1 à 12,
dans lequel l'appareil pouvant être connecté au système de bus Ethernet à 2 fils est conformé, conformément à une couche physique évoluée d'Ethernet.

14. Commutateur, comprenant un dispositif suivant l'une des revendications 1 à 13, ayant un dispositif d'interface PHY uplink et un dispositif d'interface PHY downlink, un dispositif de séparation du signal uplink et un dispositif de séparation du signal downlink, ainsi qu'un dispositif d'optocoupleur uplink et un dispositif d'optocoupleur downlink de connexion d'appareils sur site à un système de bus Ethernet à 2 fils, comprenant
- un commutateur (301) primaire,
- un commutateur (302) secondaire,
- dans lequel le commutateur primaire est connecté au dispositif (101) d'interface PHY uplink et le commutateur secondaire au dispositif (102) d'interface PHY downlink,
- dans lequel le dispositif d'interface PHY uplink et le dispositif d'interface PHY downlink comprennent chacun une unité d'émission et une unité de réception, dans lequel les unités de réception ont chacune deux bornes de sortie pour disposer comme signal différentiel d'un signal reçu codé de manière ternaire,
- dans lequel le dispositif de division du signal uplink et le dispositif de division du signal downlink sont connectés chacun aux bornes de sortie d'une unité de réception associée et sont conformés pour la subdivision d'un signal codé de manière ternaire mis à disposition comme signal de différence en deux signaux codés binaire,
- dans lequel le dispositif d'optocoupleur uplink et le dispositif d'optocoupleur downlink sont connectés chacun à un dispositif de division du signal associé et sont conformés pour la transmission de deux signaux reçus codés de manière binaire à une unité d'émission d'un dispositif d'interface PHY associé.
